Europäisches Patentamt

European Patent Office

Office européen des brevets

(11) Veröffentlichungsnummer: **0 351 565**
A2

# EUROPÄISCHE PATENTANMELDUNG

(21) Anmeldenummer: 89111148.6

(51) Int. Cl.⁴: **B32B 27/04 , B32B 3/28**

(22) Anmeldetag: 20.06.89

(30) Priorität: 19.07.88 DE 3824423

(43) Veröffentlichungstag der Anmeldung:
24.01.90 Patentblatt 90/04

(84) Benannte Vertragsstaaten:
AT BE CH DE FR GB IT LI LU NL SE

(71) Anmelder: RESOPAL GMBH
Hans-Böckler-Strasse 4
D-6114 Gross-Umstadt(DE)

(72) Erfinder: Werres, Willy, Dipl.-Ing.
Lucasweg 6
D-6100 Darmstadt(DE)

(74) Vertreter: Katscher, Helmut, Dipl.-Ing.
Bismarckstrasse 29
D-6100 Darmstadt(DE)

(54) **Schichtpressstoffplatte, insbesondere als Kernplatte für Verbundelemente, sowie daraus hergestellte Verbundelemente.**

(57) Eine Schichtpreßstoffplatte, die insbesondere als Kernplatte für Verbundelemente geeignet und bestimmt ist, besteht aus mehreren Schichten von mit aushärtbaren Kunstharzen getränkten und unter Einwirkung von Druck und Hitze gepreßten Zellulosebahnen. Die Schichtpreßstoffplatte (1) ist als Trapez-Profilplatte ausgeführt und weist mehrere in gleichmäßiger Folge nebeneinander verlaufende Trapezprofile (2) auf, in denen jeweils untere und obere Trapezbasisflächen (3, 4) durch schräg zur Ebene der Schichtpreßstoffplatte (1) verlaufende Stegflächen (5) miteinander verbunden sind. Zur Bildung einer besonders leichten, aber sehr steifen Verbundplatte können die unteren Trapezbasisflächen (3) mit einer unteren Deckplatte, vorzugsweise einer Schichtpreßstoffplatte verklebt werden. In gleicher Weise können die oberen Trapezbasisflächen (4) mit einer ebenfalls als Schichtpreßstoffplatte ausgeführten Deckplatte verklebt werden.

FIG.1

EP 0 351 565 A2

## Schichtpreßstoffplatte, insbesondere als Kernplatte für Verbundelemente, sowie daraus hergestellte Verbundelemente

Die Erfindung betrifft eine Schichtpreßstoffplatte, insbesondere als Kernplatte für Verbundelemente, bestehend aus mehreren Schichten von mit aushärtbaren Kunstharzen getränkten, unter Einwirkung von Druck und Hitze gepreßten Zellulosebahnen.

Schichtpreßstoffplatten sind bekannt (DIN 16 926), insbesondere auch als Bestandteile von Verbundelementen. In erster Linie handelt es sich hierbei um dekorative Schichtpreßstoffplatten, die mit sehr unterschiedlichen Trägerplatten an deren Deckschichten verleimt oder verklebt werden. Als Träger dieser Verbundelemente werden beispielsweise verwendet: Tischlerplatten, Stäbchenplatten, Massivholzplatten, Spanplatten, Hartfaserplatten, Gipsfaserplatten, Blähglimmerplatten, Dämmplatten, Schaumstoffe und Wabenkernplatten aus Papier. Bei Verbundelementen, an die sehr hohe Festigkeitsanforderungen gestellt werden, beispielsweise beschußsichere Platten, besteht auch die Kernplatte aus einer massiven Schichtpreßstoffplatte ausreichender Dicke.

Die so hergestellten Verbundelemente finden in sehr zahlreichen Ausführungsformen Verwendung im Möbelbau, Trennwandbau, Fahrzeug- und Schiffsbau, Innenausbau, Caravanbau, als Deckenverkleidungen und zur Schalldämmung.

Die Kombination des Materials für die Kernplatte mit der Deckplatte erfolgt in den meisten Fällen nach anwendungsspezifischen Gesichtspunkten, wobei jedoch in vielen Fällen kein optimales Ergebnis erzielt wird. So ist beispielsweise bei der Verwendung von Holzwerkstoffen, wie Spanplatten, das erhebliche Raumgewicht dieser Trägerwerkstoffe nachteilig. In vielen Anwendungsbereichen mit erhöhten Festigkeitsanforderungen ist jedoch eine Verminderung des Gewichts der Verbundplatte durch Verwendung leichterer Kernplatten nicht ohne weiteres möglich, weil diese wiederum eine Verringerung der mechanischen Festigkeit mit sich bringen.

Aufgabe der Erfindung ist es daher, eine Schichtpreßstoffplatte der eingangs genannten Gattung zu schaffen, die ein verhältnismäßig geringes Gewicht mit hoher mechanischer Festigkeit verbindet, dabei schwer entflammbar ist und eine große Formenvielfalt ermöglicht. Diese Schichtpreßstoffplatte soll insbesondere als Kernplatte für Verbundelemente geeignet sein.

Diese Aufgabe wird erfindungsgemäß dadurch gelöst, daß die Schichtpreßstoffplatte mehrere in gleichmäßiger Folge nebeneinander verlaufende Trapezprofile aufweist, in denen jeweils untere und obere Trapezbasisflächen durch schräg zur Ebene der Schichtpreßstoffplatte verlaufende Stegflächen miteinander verbunden sind, und daß einerseits die unteren Trapezbasisflächen und andererseits die oberen Trapezbasisflächen jeweils in einer gemeinsamen Plattenaußenfläche liegen, die in gleichmäßigem Abstand parallel zueinander verlaufen.

Die so als Trapezplatte profilierte Schichtpreßstoffplatte stellt ein leichtes, dabei aber steifes und insbesondere druckfestes Bauelement dar, das in vielfältiger Weise eingesetzt werden kann. Bei der Verwendung von Duroplastharzen wird eine auch bei höheren Temperaturen irreversible Formgebung der Schichtpreßstoffplatte erreicht. Sie ist schwer entflammbar und deshalb besonders für das Bauwesen geeignet. Durch unterschiedliche Wahl der Steghöhe lassen sich in einfacher Weise Trapezprofile mit unterschiedlicher Profildicke herstellen. Durch unterschiedliche Wahl der Materialdicke der Schichtpreßstoffplatte läßt sich wahlweise sowohl eine hohe Steifigkeit quer zur Profilrichtung als auch eine flexible Ausführung erzielen. Durch Abstufung der Materialdicke lassen sich somit Platten herstellen, deren Verarbeitung zu unterschiedlichen geometrischen Figuren möglich ist, insbesondere auch in Verbundelementen.

Die erfindungsgemäße Schichtpreßstoffplatte ist auch schon ohne Verarbeitung mit Deckplatten zu einer Trägerplatte als Bauelement, beispielsweise im Bauwesen geeignet. Da die Profilierung eine dekorativ ansprechende Gestaltung ergibt, können die Trapezplatten unmittelbar als profilierte Kassettenplatten im Innenausbau Verwendung finden. Hierzu wird vorzugsweise bei der Herstellung der Trapezplatte einseitig oder beidseitig eine dekorative Schicht aufgebracht, beispielsweise eine mit der Schichtpreßstoffplatte verpreßte dekorative Melaminharzfolie, so daß man eine dekorative Trapezplatte erhält.

Ein besonders bedeutsames Einsatzgebiet der erfindungsgemäßen Trapez-Schichtpreßstoffplatte liegt aber in der Herstellung von Verbundelementen, wobei die Trapez-Schichtpreßstoffplatte die Kernplatte bildet, die einseitig oder beidseitig an ihren Trapezbasisflächen mit einer Schichtpreßstoffplatte als Deckplatte verklebt ist.

Die hohe Steifigkeit der Trapez-Schichtpreßstoffplatte führt zu einer hohen Druckfestigkeit des daraus hergestellten Verbundelements. Beidseitig mit einer Schichtpreßstoffplatte als Deckplatte und einer Trapez-Schichtpreßstoffplatte als Kern ausgestattete Verbundelemente weisen zudem eine hohe Biegesteifigkeit in allen Richtungen auf und haben ein verhältnismäßig geringes Raumgewicht. Sie können bevorzugt dort eingesetzt werden, wo Verbundplatten einerseit sehr leicht sein müssen, andererseits aber eine hohe Festigkeit aufweisen müssen.

Da die sowohl für die Deckplatten als auch für die Kernplatte verwendeten Schichtpreßstoffplatten vor ihrer Verbindung bei geeigneter Wahl der Materialdicke noch flexibel sind, ermöglichen sie die Herstellung von mindestens teilweise gekrümmten bzw. gewölbten Verbundelementen, wobei die Krümmungsachsen parallel zu den Trapezprofilen der Kernplatten verlaufen. Auf diese Weise lassen sich die Verbundelemente als Profilschalen, beispielsweise Halbschalen, Rohre, U-Schalen oder Winkelprofile herstellen.

Darüber hinaus betrifft die Erfindung auch eine unter Verwendung von Schichtpreßstoffplatten hergestellte Verbundelement, das aus einer Wabenkernplatte und mindestens einer damit verklebten Deckplatte besteht.

Verbundplatten mit Wabenkernplatten sind bekannt. Gemäß der Erfindung besteht die Wabenkernplatte aus miteinander verklebten streifenförmigen Abschnitten der beschriebenen Trapez-Schichtpreßstoffplatte, wobei in diesen Abschnitten die Trapezprofile senkrecht zu den Deckplatten verlaufen. Die so aufgebauten Verbundplatten haben eine sehr hohe Steifigkeit und Druckfestigkeit. Unter Verwendung von Trapez-Schichtpreßstoffplatten mit gleichbleibender Profilhöhe lassen sich durch unterschiedliche Wahl der Breite der daraus geschnittenen Streifen in fertigungstechnisch sehr einfacher Weise unterschiedliche Dicken der daraus hergestellten Verbundelemente erzielen.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:

Fig. 1 in räumlicher Darstellungsweise einen Abschnitt einer Trapez-Schichtpreßstoffplatte gemäß der Erfindung,

Fig. 2 eine daraus hergestellte Verbundplatte,

Fig. 3 in einem Querschnitt einen Teil einer Verbundplatte ähnlich der Fig. 2, die jedoch als gewölbte Schale ausgeführt ist, und

Fig. 4 in räumlicher Darstellungsweise und teilweise geöffnet eine Verbundplatte mit einer Wabenkernplatte.

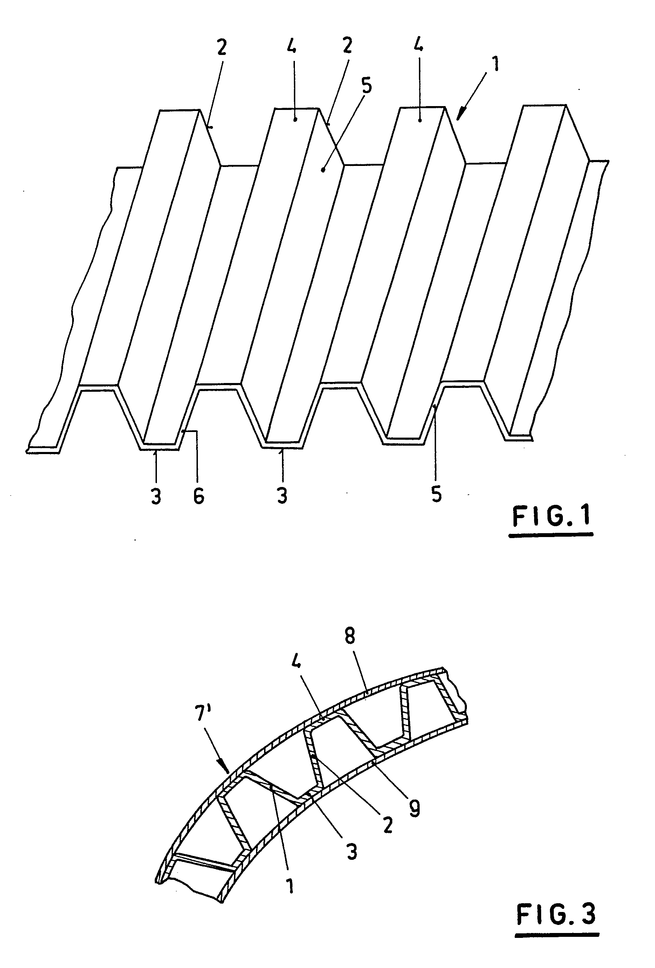

Die in Fig. 1 dargestellte Schichtpreßstoffplatte 1 besteht aus mehreren Schichten von mit aushärtbaren Kunstharzen getränkten, unter Einwirkung von Druck und Hitze gepreßten Zellulosebahnen und ist als Trapezplatte profiliert. Sie weist mehrere in gleichmäßiger Folge nebeneinander verlaufende Trapezprofile 2 auf, in denen jeweils untere und obere Trapezbasisflächen 3 bzw. 4 durch schräg zur Ebene der Schichtpreßstoffplatte 1 verlaufende Stegflächen 5 miteinander verbunden sind. Die unteren Trapezbasisflächen 3 liegen in einer gemeinsamen Plattenaußenfläche; ebenso liegen die oberen Trapezbasisflächen 4 in einer gemeinsamen Plattenaußenfläche, die in gleichmäßigem Abstand parallel zueinander verlaufen.

Wie bei der Herstellung von Schichtpreßstoffplatten üblich, werden die die Schichten bildenden Zellulosebahnen mit Amino- und/oder Phenoplastharzen imprägniert. Diese Zellulosebahnen werden in einer Druckform mit Druck und erhöhter Temperatur beaufschlagt und gepreßt.

Neben Niederdruckharzen können insbesondere auch Hochdruckharze, wie Amino- und Phenoplastharze Verwendung finden. Die Formgebung und Aushärtung erfolgt jedoch vorwiegend im Niederdruckverfahren. Der Preßzyklus umfaßt etwa 15 bis 20 Min. bei einem Druck von 6 bis 15 bar und einer Preßtemperatur von 170 bis 185° C. Durch Anwendung dieser Temperaturen wird der für das Harzsystem erforderliche Hochdruck kompensiert. Je nach der Anzahl der verwendeten Zellulosebahnen, die beispielsweise 3 bis 10 oder mehr betragen kann, ergibt sich nach dem Preßvorgang eine entsprechend dicke Schichtpreßstoffplatte. Stattdessen kann aber auch im Hochdruckverfahren gearbeitet werden.

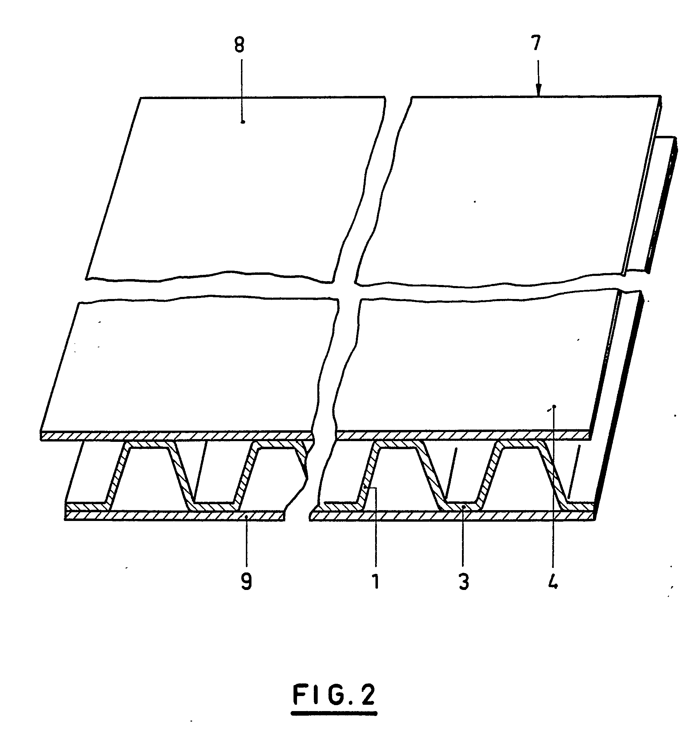

Wenn die Trapezschichtpreßstoffplatte 1 unmittelbar als dekoratives Bauelement verwendet werden soll, kann sie beidseitig oder nur an einer Seite mit einer dekorativen Melaminharzplatte 8 verpreßt sein. Fig. 2 zeigt eine unter Verwendung einer Trapez-Schichtpreßstoffplatte 1 hergestellte Verbundplatte 7. Die Trapez-Schichtpreßstoffplatte 1 ist an ihren unteren und oberen Trapez-Basisflächen 3 und 4 mittels eines Klebstoffes. beispielsweise Polyurethan, Epoxidharz oder einem Kontaktklebstoff mit einer oberen Deckplatte 8 und einer unteren Deckplatte 9 verklebt. Die Deckplatten 8 und 9 sind ebenfalls Schichtpreßstoffplatten, vorzugsweise an ihrer Außenseite mit einer dekorativen Schicht versehene Schichtpreßstoffplatten.

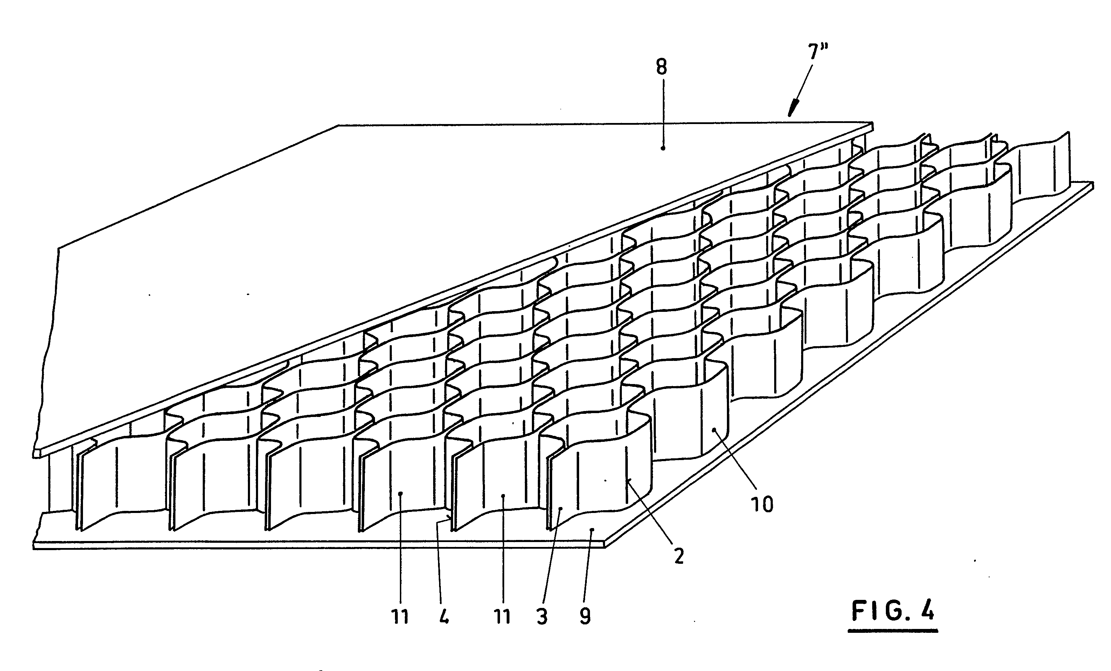

Fig. 3 zeigt eine gegenüber dem Beispiel nach Fig. 2 dahingehend abgewandelte Ausführungsform, daß die Verbundplatte 7′ gekrümmt ist. Hierzu ist die Trapez-Schichtpreßstoffplatte 1, die ebenso wie beim Beispiel nach Fig. 2 den Träger der Verbundplatte bildet, um eine oder mehrere Krümmungsachsen gekrümmt, die parallel zu den Trapezprofilen 2 verlaufen. Anschließend werden beiderseits die ebenfalls gekrümmten Deckplatten 8 und 9 in der schon beschriebenen Weise aufgebracht.

Eine andere Ausführungsform einer Verbundplatte 7″ ist in Fig. 4 gezeigt. Zwischen den aufgeklebten Deckplatten 8 und 9 ist hierbei eine Wabenkernplatte 10 angeordnet, die aus miteinander verklebten streifenförmigen Abschnitten 11 einer Trapez-Schichtpreßstoffplatte 1 bestehen, wie sie in Fig. 1 gezeigt ist. In diesen streifenförmigen Abschnitten 11 verlaufen die Trapezprofile 2 jeweils senkrecht zu den Deckplatten 8 und 9.

Jeweils benachbarte streifenförmige Abschnitte 11 sind in der Wabenkernplatte 10 jeweils an ihren Trapezbasisflächen 3 bzw. 4 miteinander verklebt und bilden somit eine bienenwabenförmige Wabenkernplatte 10.

**Ansprüche**

1. Schichtpreßstoffplatte, insbesondere als Kernplatte für Verbundelemente, bestehend aus mehreren Schichten von mit aushärtbaren Kunstharzen getränkten, unter Einwirkung von Druck und Hitze gepreßten Zellulosebahnen, dadurch gekennzeichnet, daß die Schichtpreßstoffplatte (1) mehrere in gleichmäßiger Folge nebeneinander verlaufende Trapezprofile (2) aufweist, in denen jeweils untere und obere Trapezbasisflächen (3, 4) durch schräg zur Ebene der Schichtpreßstoffplatte (1) verlaufende Stegflächen (5) miteinander verbunden sind, und daß einerseits die unteren Trapezbasisflächen (3) und andererseits die oberen Trapezbasisflächen (4) jeweils in einer gemeinsamen Plattenaußenfläche liegen, die in gleichmäßigem Abstand parallel zueinander verlaufen.

2. Schichtpreßstoffplatte nach Anspruch 1, dadurch gekennzeichnet, daß sie als dekorative Schichtpreßstoffplatte ausgeführt ist und mindestens auf einer Seite eine dekorative Schicht (8, 9) trägt.

3. Schichtpreßstoffplatte nach Anspruch 2, dadurch gekennzeichnet, daß die dekorative Schicht (8, 9) bzw. die beiden dekorativen Schichten aus einer mit der Schichtpreßstoffplatte (1) verpreßten dekorativen Melaminharzplatte besteht.

4. Schichtpreßstoffplatte nach einem der Ansprüche 1-3, dadurch gekennzeichnet, daß die die Schichtpreßstoffplatte bildenden Zellulosebahnen mit Hochdruckharzen getränkt und im Niederdruckverfahren verarbeitet sind.

5. Unter Verwendung von Schichtpreßstoffplatten hergestellte Verbundplatte, bestehend aus einer Kernplatte und mindestens einer Deckplatte, dadurch gekennzeichnet, daß die Kernplatte eine Schichtpreßstoffplatte (1) ist, die mehrere in gleichmäßiger Folge nebeneinander verlaufende Trapezprofile (2) aufweist, in denen jeweils untere und obere Trapezbasisflächen (3, 4) durch schräg zur Ebene der Schichtpreßstoffplatte (1) verlaufende Stegflächen (5) miteinander verbunden sind, und daß einerseits die unteren Trapezbasisflächen (3) und andererseits die oberen Trapezbasisflächen (4) jeweils in einer gemeinsamen Plattenaußenfläche liegen, die in gleichmäßigem Abstand parallel zueinander verlaufen.

6. Verbundplatte nach Anspruch 5, dadurch gekennzeichnet, daß die Kernplatte (1) einseitig an ihren Basisflächen (3) mit einer Schichtpreßstoffplatte als Deckplatte (9) verklebt ist.

7. Verbundplatte nach Anspruch 5, dadurch gekennzeichnet, daß die Kernplatte (1) beidseitig an ihren Trapezbasisflächen (3, 4) mit jeweils einer Schichtpreßstoffplatte (8, 9) als Deckplatte verklebt ist.

8. Verbundplatte nach Anspruch 5, dadurch gekennzeichnet, daß die Verbundplatte mindestens teilweise um eine oder mehrere, parallel zu den Trapezprofilen (2) verlaufende Krümmungsachse bzw. Krümmungsachsen gekrümmt bzw. gewölbt ist.

9. Verbundplatte nach Anspruch 8, dadurch gekennzeichnet, daß sie eine Profilschale bildet.

10. Unter Verwendung von Schichtpreßstoffplatten hergestellte Verbundplatte, bestehend aus einer Wabenkernplatte und mindestens einer damit verklebten Deckplatte, dadurch gekennzeichnet, daß die Wabenkernplatte (10) aus miteinander verklebten streifenförmigen Abschnitten (11) einer Schichtpreßstoffplatte (10) bestehen, die mehrere in gleichmäßiger Folge nebeneinander verlaufende Trapezprofile (2) aufweist, in denen jeweils untere und obere Trapezbasisflächen (3, 4) durch schräg zur Ebene der Schichtpreßstoffplatte (1) verlaufende Stegflächen (5) miteinander verbunden sind, und daß einerseits die unteren Trapezbasisflächen (3) und andererseits die oberen Trapezbasisflächen (4) jeweils in einer gemeinsamen Plattenaußenfläche liegen, die in gleichmäßigem Abstand parallel zueinander verlaufen, und daß in den die Wabenkernplatte (10) bildenden streifenförmigen Abschnitten (11) die Trapezprofile (2) senkrecht zu den Deckplatten (8, 9) verlaufen.

11. Verbundplatte nach Anspruch 10, dadurch gekennzeichnet, daß benachbarte streifenförmige Abschnitte (11) in der Wabenkernplatte (10) jeweils an ihren Trapezbasisflächen (3, 4) miteinander verklebt sind.

FIG.1

FIG.3

# FIG. 2

FIG. 4